# EUROPÄISCHE PATENTANMELDUNG

(11) **EP 2 447 716 A1**
(43) Veröffentlichungstag der Anmeldung: **02.05.2012**
(21) Anmeldenummer: 10189026.7
(22) Anmeldetag: 27.10.2010
(51) Int. Cl.: G01N 30/68, B01L 3/00, G01N 27/62

(54) **Gegenstrombrenner für einen Flammenionisationsdetektor**

(71) Anmelder: Bayer Technology Services GmbH, 51368 Leverkusen (DE)
(72) Erfinder: Müller, Jörg, 21244 Buchholz (DE); Kuipers, Winfred, 22765 Hamburg (DE)

(57) **Zusammenfassung**

Gegenstand der vorliegenden Erfindung ist ein Gegenstrombrenner, ein Flammenionisationsdetektor, in dem der erfindungsgemäße Gegenstrombrenner eingebracht wird, sowie Verfahren zur Analyse von Gasen.

## Beschreibung

Gegenstand der vorliegenden Erfindung ist ein Gegenstrombrenner, ein Flammenionisationsdetektor, in dem der erfindungsgemäße Gegenstrombrenner eingebracht wird, sowie ein Verfahren zur Analyse von Gasen.

Flammenionisationsdetektoren (FID) sind allgemein bekannt (siehe z.B. US 3,585,003, US 4,182,740).

FID werden vielfältig in der chemischen und biochemischen Industrie und im Umweltschutz eingesetzt, teilweise als Detektoren in einem Gaschromatographen oder als eigenständige Sensoren zur Überwachung der Menge an unverbrannten Kohlenwasserstoffen.

Ein FID umfasst einen Brenner, in welchem eine Flamme aus einem brennbaren Gemisch aus Brenngas (üblicherweise Wasserstoff) und Oxidationsmittel (üblicherweise Sauerstoff oder Luft) erzeugt wird. Dem Brenner kann eine Gasprobe zugeleitet werden, deren Konzentration gemessen oder überwacht werden soll. Das Messprinzip des FID beruht darauf, dass durch die Gasprobe in der Flamme Ionen gebildet werden. Die Flamme brennt zwischen zwei Elektroden, an denen eine Gleichspannung liegt. Die in der Flamme entstehenden Ionen bewirken einen Ladungstransport, der als Ionenstrom messbar ist.

Nachteilig bei der Verwendung eines FID z.B. im Vergleich zu einem Wärmeleitfähigkeitsdetektor ist der relativ hohe Verbrauch an Brenngas und Oxidationsmittel. Da die üblicherweise verwendeten Gase Wasserstoff und Sauerstoff explosive Mischungen bilden können, bergen FID zudem gewisse Sicherheitsrisiken in sich.

Eine Möglichkeit, die Sicherheitsrisiken und den Gasverbrauch zu reduzieren, besteht in der Miniaturisierung des FID. In US2008/0213908A1 ist beispielsweise ein miniaturisierter FID (µFID) offenbart. Er ist dadurch gekennzeichnet, dass die Brennkammer von einer Kapillare aus nichtrostendem Stahl umgeben ist. Die Herstellung entsprechender kleiner Kapillaren ist zwar möglich, der Zusammenbau der Brennkammer, die aus unterschiedlichen Teilen besteht, bereitet aber erhebliche Schwierigkeiten und Kosten, insbesondere dann, wenn möglichst kleine Strukturen verwendet und diese in Serienfertigung hergestellt werden sollen. Außerdem erstreckt sich eine Kapillare nur in eine Richtung, ist also ein im Wesentlichen ein eindimensionales Gebilde, so dass nur wenige Möglichkeiten bestehen, die Flamme zu beeinflussen.

Ausgehend vom bekannten Stand der Technik stellt sich die Aufgabe, einen Flammenionisationsdetektor mit einer hohen Sensitivität bei gleichzeitig geringem Verbrauch an Brenngas und Oxidationsmittel bereitzustellen. Der FID soll in einer Serienfertigung kostengünstig herzustellen sein und über geringe Abmessungen verfügen, damit er vielfältig einsetzbar ist.

Erfindungsgemäß wird diese Aufgabe durch einen FID gemäß Anspruch 5 gelöst. Ein integraler Gegenstand des erfindungsgemäßen FID ist ein Gegenstrombrenner gemäß Anspruch 1. Ein solcher Gegenstrombrenner ist daher ebenfalls Gegenstand der vorliegenden Erfindung. Weiterhin ist ein Verfahren zur Analyse von Gasen gemäß Anspruch 8 ein Gegenstand der vorliegenden Erfindung. Bevorzugte Ausführungsformen finden sich in den jeweiligen abhängigen Ansprüchen.

Der erfindungsgemäße Gegenstrombrenner umfasst drei planare Substrate, die übereinanderliegend miteinander verbunden sind. Das mittlere Substrat weist eine Brennkammer auf. Brenngas und Oxidationsmittel werden vorzugsweise über getrennte Kanäle der Brennkammer zugeführt.

Vorzugsweise verschließt das obere und das untere Substrat die Brennkammer im mittleren Substrat vollständig. Die Zufuhr von Brenngas und Oxidationsmittel sowie die Abfuhr der Abgase erfolgen damit vorzugsweise in der Ebene des mittleren Substrats.

Die Kanäle münden aus entgegengesetzten Richtungen in die Brennkammer.

Wenn Brenngas und Oxidationsmittel (z.B. Wasserstoff und Sauerstoff) aus entgegengesetzten Richtungen aufeinandertreffen, heben sich ihre Impulse wenigstens teilweise auf. Man erhält so eine Flammenform, die sich nicht nur länglich, sondern auch kugelförmig gestalten lässt. Dies ist bei einer Vormischflamme nicht der Fall, da dort beide Gase im Wesentlichen in eine Richtung strömen.

Die Kugelform ist für die Flammenstabilität aufgrund der minimalen Oberfläche, über die die Wärme abgegeben wird, im Vergleich zum Volumen, in dem die Wärme erzeugt wird, besonders günstig.

Die Öffnungen der Kanäle in die Brennkammer werden hier auch als Düsen bezeichnet. Es wurde gefunden, dass der Abstand von gegenüberliegenden Düsen, über die Gase in die Brennkammer geleitet werden, Einfluss auf die Sensitivität eines FID hat. Ebenso wurde gefunden, dass die Größe der Düsenöffnungen einen Einfluss auf die Sensitivität eines FID hat.

Der Abstand von gegenüberliegenden Düsen ist vorzugsweise geringer als 3 mm, besonders bevorzugt geringer als 2 mm, ganz besonders bevorzugt geringer als 1,5 mm.

Die Größe der Düsenöffnung liegt bevorzugt im Bereich von 0,005 mm² bis 0,08 mm², besonders bevorzugt im Bereich von 0,005 mm² bis 0,06 mm², ganz besonders bevorzugt im Bereich von 0,01 mm² bis 0,04 mm².

Experimentell wurde eine höchste Sensitivität von 11 mC/gC bei einem Düsenabstand von 1 mm und einer Düsenöffnung der Größe 0,03 mm² erzielt. Diese Sensitivität wurde bei gleichen Volumenströmen von Wasserstoff und Sauerstoff von 7,5 ml/min erreicht. Konventionelle FID erreichen vergleichbare Sensitivitäten, jedoch werden sie bei höheren Volumenströmen von etwa 30 ml/min H₂ und 300 ml/min Luft betrieben.

Die Sensititvität eines FID ist definiert als Ionenstrom (Einheit A=C/s) dividiert durch den Kohlenstoffmassenstrom (Einheit gC/s). Weitere Details zur Messung von Sensitivitäten bei FID sind in der Literatur beschrieben (siehe z.B. S. Zimmermann et al., Sensors and Actuators B 83 (2002) 285 sowie die dort aufgeführten Referenzen).

In einer bevorzugten Ausführungsform sind zwei aufeinander zu gerichtete Kanäle vorhanden, wobei durch einen das Brenngas und durch den anderen das Oxidationsmittel der Brennkammer zugeführt wird.

Eine weitere bevorzugte Ausführungsform zeichnet sich dadurch aus, dass die Kanäle sternförmig in die Brennkammer münden. Die Gase treffen dadurch nicht nur von zwei Seiten in der Brennkammer aufeinander, sondern von mehreren Seiten, was zur Kontrolle bzw. Vergleichmäßigung der Flamme dienen kann. Im Gegensatz zu Fällen, wo Brenngas und Oxidationsmittel aus entgegengesetzten Richtungen auftreffen, kann der Nettoimpuls der aufeinander treffenden Gase dann sogar zu Null gemacht werden.

Treffen beispielsweise Sauerstoff und die doppelte Menge von Wasserstoff aufeinander, um als Knallgas zu verbrennen, so hat der Sauerstoff aufgrund des größeren Molekulargewichts einen größeren Impuls als der Wasserstoff, so dass sich die Impulse nicht zu Null addieren. Bei einer sternförmigen Anordnung kann man jedoch die Gase von mehreren Seiten aufeinander treffen lassen und dabei immer zwei Oxidationsmittelströme und zwei Brenngasströme aus genau entgegengesetzten Richtungen aufeinander treffen lassen, so dass sich der Gesamtimpuls zu Null addiert. Man erhält so eine besonders gute Kugelform und damit auch eine besonders hohe Temperatur der Flamme.

Zweckmäßigerweise sind bei der sternförmigen Anordnung die Kanäle auf den Mittelpunkt der Brennkammer gerichtet, damit sich die Impulse der eintretenden Gasstrome zu Null addieren. Es ist aber auch möglich, die Kanäle tangential auf den Umfang eines gedachten Zylinders zu richten, der koaxial in der Brennkammer angeordnet ist. Auf diese Weise erreicht man eine wirbelförmige Flamme.

Eine Kompensation der Impulse kann man aber auch durch das Aufeinandertreffen von Brenngas und Oxidationsmittel aus entgegengesetzten Richtungen erreichen. Ist die zu untersuchende Probe Luft, die bekanntlich zu 80% aus Stickstoff besteht, kann die zu untersuchende Luft einem Wasserstoff-Brenngas zugemischt werden. Dieses Gasgemisch hat dann ungefähr das gleiche Molekulargewicht wie der von der entgegengesetzten Richtung zugeführte Sauerstoff. Bei der sternförmigen Anordnung ist dabei auch ein Sauerstoffüberschuss möglich, was eine höhere Ionenausbeute ergibt.

Eine weitere Maßnahme zur Erhöhung der Flammenstabilität besteht darin, die Geschwindigkeiten der Gasströme so aufeinander abzustimmen, dass sich die Impulse der aufeinander treffenden Gase zu Null addieren. Beispielsweise kann Sauerstoff mit geringerer Geschwindigkeit als Wasserstoff in die Brennkammer eingeleitet werden. Unterschiede in den Gasgeschwindigkeiten können insbesondere dadurch erreicht werden, dass die Kanäle im zur Brennkammer gerichteten Endbereich unterschiedliche Querschnitte aufweisen, z.B. einen größeren Querschnitt in den für den Sauerstoff vorgesehenen Kanälen als in den für Wasserstoff vorgesehenen Kanälen.

Bei einer bevorzugten Ausführungsform schließen das obere und das untere Substrat das mittlere Substrat vollständig ab, so dass alle Gase in der Ebene des mittleren Substrats in die Brennkammer eintreten und dieselbe verlassen. Bei einer weiteren bevorzugten Ausführungsform weisen das obere und das untere Substrat zur Brennkammer führende Bohrungen auf, durch die Gas in Richtung senkrecht zur Ebene des Substrats eintreten bzw. austreten kann. Selbstverständlich müssen hier jeweils zwei Öffnungen gegenüberliegen, damit das Gas in entgegengesetzten Richtungen durch die beiden Öffnungen eintreten oder austreten kann.

Alle genannten Ausführungsformen haben den Vorteil, dass sie lageunabhängig arbeiten. Sie müssen also für den Betrieb nicht genau ausgerichtet werden und können sogar auf den Kopf gestellt werden.

Der Gegenstrombrenner besteht nicht wie die Systeme aus dem Stand der Technik im Wesentlichen aus Kapillaren, sondern aus planaren Strukturen. Diese können besonders gut bearbeitet werden, insbesondere auch mit den Methoden der Mikrosystemtechnik, so dass man sehr kleine Strukturen in Serienfertigung erhalten kann.

Im mittleren Substrat ist die Brennkammer angeordnet, von der in der Ebene des Substrats liegende Kanäle vorzugsweise in entgegengesetzten Richtungen zum Rand des Substrats führen. Die Kanäle können mit Hilfe der Mikrosystemtechnik im mittleren Substrat beliebig geformt werden. Sie können dabei auch so ausgebildet werden, dass Wärmetauscher gebildet werden, indem die Abgaskanäle wenigstens am Rand des mittleren Substrats sehr nahe bei den Kanälen für das Brenngas und/oder Oxidationsmittel vorgesehen sind.

Die Dicke des mittleren Substrats liegt vorzugsweise im Bereich von 250 µm bis 1000 µm, besonders bevorzugt im Bereich von 300 µm bis 700 µm, besonders bevorzugt im Bereich von 400 µm bis 600 µm.

Vorteilhafterweise besteht das mittlere Substrat aus Silizium, das sich mit Hilfe der Mikrosystemtechnik besonders gut bearbeiten lässt. Die zunächst offenen Kanäle und die offene Brennkammer, die durch die bekannten Verfahren der Mikrosystemtechnik hergestellt werden können, werden durch die oberen und unteren Substrate zumindest im Wesentlichen verschlossen.

Das obere und/oder das untere Substrat bestehen vorzugsweise aus Borosilikatglas. Einerseits kann dieses Borosilikatglas ebenfalls mithilfe der Mikrosystemtechnik strukturiert werden. Andererseits lässt es sich mit einem anodischen Bondverfahren mit Silizium verbinden, so dass die Herstellung des erfindungsgemäßen Gegenstrombrenner und des erfindungsgemäßen Flammenionisationsdetektors keine Probleme bereitet. Ferner hat Borosilikatglas auch eine niedrige thermische Leitfähigkeit, wodurch Wärmeverluste verringert werden, was die Flammenstabilität und Flammentemperatur erhöht.

Wie erwähnt können auch das obere und das untere Substrat mit Methoden der Mikrosystemtechnik strukturiert werden, um z.B. die Brennkammer in diese Substrate hineinreichen zu lassen oder um die Querschnitte der Kanäle zu erhöhen.

Die Mikrosystemtechnik bietet zudem den Vorteil, dass auch noch weitere für den speziellen Anwendungszweck wichtige Eigenschaften und Formen erreicht werden können.

Zweckmäßigerweise sind die Kanäle für mindest eine der Gasströmungen mit einer den Gegenstrombrenner umgebenden Druckausgleichskammer verbunden, um sicher zu sein, dass tatsächlich durch alle Kanäle das Brenngas und/oder das Oxidationsmittel mit gleicher Geschwindigkeit eintreten bzw. die Abgase austreten.

Bei einer vorteilhaften Ausführungsform sind in der Brennkammer die Flamme stabilisierende Elemente auf dem oberen und/oder unteren Substrat angebracht. Dies können z.B. zylinderförmige Elemente sein, die die eigentliche Flamme zylinderförmig umschließen.

Der erfindungsgemäße Gegenstrombrenner weist vorzugsweise Mittel zur Zündung des Gemisches aus Brenngas und Oxidationsmittel in der Brennkammer auf. Es ist zum Beispiel denkbar, gegenüberliegende Vorsprünge in der Brennkammer zu realisieren, zwischen denen ein Zündfunke erzeugt werden kann.

Die oberen und/oder unteren Substrate können im Bereich der Brennkammer mit die Verbrennung initiierenden oder beschleunigenden Materialien beschichtet sein, z.B. mit Platin, das mit Verfahren der Mikrosystemtechnik wie Kathodenzerstäubung oder Aufdampfen aufgebracht werden kann.

Die Flamme weist vorzugsweise einen Abstand von den Düsen auf, so dass über die Düsen nur wenig Wärme abgeführt wird. Experimentelle Untersuchungen und Simulationen haben gezeigt, dass die Flamme am so genannten Stillstandspunkt brennt, das heißt dort, wo die Geschwindigkeiten von Brenngas und Oxidationsmittel vernachlässigbar gering sind und eine Durchmischung der Gase infolge Diffusion stattfindet. Vorzugsweise wird der Gegenstrombrenner daher so ausgeführt und die Gase so zugeleitet, dass die Flamme in der Mitte der Brennkammer brennt. Entsprechende Maßnahmen sind oben detailliert aufgeführt.

Der erfindungsgemäße Gegenstrombrenner erlaubt geringere Gasgeschwindigkeiten, insbesondere geringere Abgasgeschwindigkeiten, wodurch Wärmeverluste durch erzwungene Konvektion verringert werden. All dies liefert dabei Beitrage, die Flammentemperatur zu erhöhen. Im Fall eines Flammenionisationsdetektors erhält man zudem eine größere Aufenthaltsdauer des zu untersuchenden Probengases in der Brennkammer.

Der erfindungsgemäße Gegenstrombrenner kann vielfältig eingesetzt werden. Der Gegenstrombrenner kann beispielsweise für die Flammenspektrometrie eingesetzt werden. Abhängig von der Analysemethode wird zusätzlich entweder nur ein optisches Spektrometer (Atomemissionsspektrometer, Chemielumeniszenzspektrometer) oder auch eine Strahlungsquelle gebraucht (Atomabsorbtionsspektrometie, Atomfluoreszenzspektrometrie). Weitere Anwendung findet der Mikrogegenstrombrenner z.B. für fotometrische Gaschromatographie und Gaschromatographie mit Messung der erzeugten Ionisation. Entsprechende Vorrichtungen können dabei nicht nur wissenschaftlichen Zwecken dienen, sondern sind auch z.B. geeignet, in der Umwelttechnik eingesetzt zu werden, um schädliche Gase festzustellen.

Vorzugsweise wird der erfindungsgemäße Gegenstrombrenner in einem Flammenionisationsdetektor verwendet.

Für die Funktion des Flammenionisationsdetektors wird der planare Gegenstrombrenner vorzugsweise mit drei Elektroden ausgestattet: eine Messelektrode und eine Gegenelektrode, über die eine Spannung angelegt wird und zwischen denen der Ionenstrom gemessen wird, und eine Schutzelektrode, die verhindert, dass durch das Glas fließende Leckstrome bei der Messung des Ionenstroms miterfasst werden.

Vorzugsweise sind die Messelektrode und die Schutzelektrode als dünne Filme auf dem Boden der Brennkammer auf dem unteren Substrat aufgebracht, während die seitlichen Wände der Brennkammer, die durch das mittlere, elektrisch leitende Substrat gebildet werden, die Gegenelektrode bilden.

In einer bevorzugten Ausführungsform ist am Kopf der Brennkammer, am oberen Substrat eine weitere Gegenelektrode als dünner Film aufgebracht.

Normalerweise wird ein Flammenionisationsdetektor mit hohem Wasserstofffluss unter zehnfacher Menge an Stützluft betrieben, was aufgrund des Sauerstoffsbedarfs und der Abschirmung erforderlich ist. In einem planaren Mikrobrenner wird die Flamme vom Brenner selbst abgeschirmt, so dass auf Stützluft verzichtet werden kann und die Flamme mit Knallgas betrieben werden kann (WO 2009/036854 Al). Mit dem erfindungsgemäßen Gegenstromverfahren des Mikrobrenners lässt sich der Wasserstoff- und Sauerstoffverbrauch noch weiter reduzieren, ohne dass die Flamme ihre Ionisationskraft verliert.

Die kleinen Mengen an Wasserstoff und Sauerstoff zum Betrieb des Gegenstrombrenners können beispielsweise mittels Elektrolyse von wässrigen Lösungen erzeugt werden.

Vorzugsweise weisen die Volumenströme des Brenngases und des Oxidationsmittels dieselbe Größenordnung auf, d.h. unterscheiden sich um einen Faktor von weniger als 10. Besonders bevorzugt unterscheiden sie sich um einen Faktor von weniger als 5, ganz besonders bevorzugt im einen Faktor von weniger als 3.

Für die Gasanalyse ist eine Abschirmung der Flamme von der Umgebung bedeutend, um Störsignale zu vermeiden. Dazu müssen die Öffnungen der Gasabfuhr ausreichend klein gestaltet werden. Um einen Druckanstieg, der die Flammenstabilität verschlechtert, in der Brennkammer zu verhindern, kann das Gas abgepumpt werden. Gleichzeitig kann der in der Kammer entstehende Unterdruck für die Probenentnahme genutzt werden.

Die Erfindung wird im Folgenden anhand von vorteilhaften Ausführungsformen unter Bezugnahme auf die beigefügten Zeichnungen beispielhaft beschrieben.

Es zeigen:
Fig. 1-5 fünf verschiedene Ausführungsformen eines erfindungsgemäßen Gegenstrombrenners in schematischer Ansicht
Fig. 6 einen erfindungsgemäßen Flammenionisationsdetektor in perspektivischer Darstellung
Fig. 7 den in Fig. 6 dargestellten FID im Querschnitt von der Seite
Fig. 8 die Brennkammer eines FID im Querschnitt von oben
Fig. 9 die elektrischen Feldlinien in verschiedenen Brennkammern mit unterschiedlichen Elektrodenanordnungen
Fig. 10 eine grafische Darstellung der elektrischen Feldstärken in den in Fig. 9 gezeigten Brennkammern
Fig. 11 eine schematische Darstellung der Herstellungssequenz eines erfindungsgemäßen FID
Fig. 12 Falschfarbendarstellung von fotografischen Aufnahmen von Flammen in verschiedenen Brennkammern

### Bezugszeichen

1 unteres Substrat (Borosilikatglas)
2 mittleres Substrat (Silizium)
3 oberes Substrat (Borosilikatglas)
4 Kanäle, durch die Gase in die Brennkammer geleitet werden oder aus der Brennkammer entweichen können
5 Brennkammer
10 Messelektrode (Pt)
20 Gegenelektrode
20a Gegenelektrode als Schicht am Kopf der Brennkammer
20b Wandgegenelektrode
30 Schutzelektrode (Cr)
40 Isolationsschicht (SiO₂)
60 Bondinseln
70 Düsen/Kanalöffnungen
80 Zündspitzen
90 alternative elektrische Verbindungsstelle für Gegenelektrode
100 Flamme

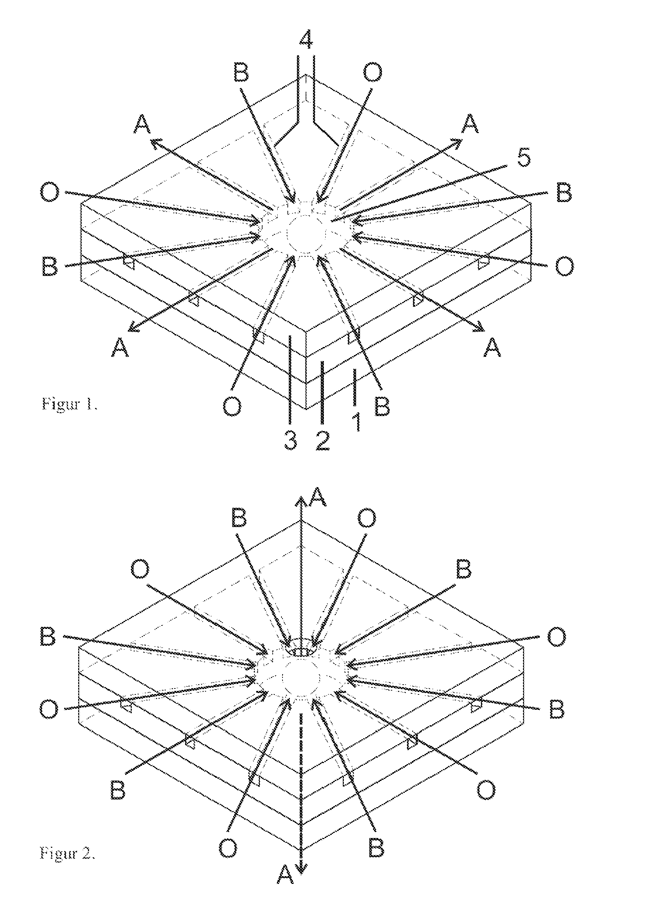

Wie in den Figuren 1-5 gezeigt ist, weist der Gegenstrombrenner der Erfindung drei Substrate auf, ein unteres Substrat (1) aus Borosilikatglas, ein mittleres Substrat (2) aus Silizium und ein oberes Substrat (3) aus Borosilikatglas. Im mittleren Substrat (2) sind Kanäle 4 angeordnet, die sternförmig auf die Brennkammer (5) gerichtet sind. Die Gase strömen jeweils in Richtung der Pfeile in die Brennkammer (5) ein bzw. aus derselben heraus. Mit "B" sind dabei die Strömungsrichtungen der Brenngase, mit "O" die Strömungsrichtungen der Oxidationsmittel und mit "A" die Strömungsrichtungen der Abgase bezeichnet. Bei der Ausführungsform der Figur 1 treffen jeweils zwei Brenngasströme aufeinander, treffen jeweils zwei Oxidationsmittelströme aufeinander und verlassen jeweils zwei entgegengesetzt gerichtete Abgasströme A die Brennkammer (5). Auf diese Weise ist der Impuls der Flamme insgesamt Null.

Auch bei der Ausführungsform der Figur 2 treffen Brenngase B und Oxidationsmittel O durch die Kanäle aus entgegengesetzten Richtungen in der Brennkammer (5) aufeinander. Die Abgase verlassen die Brennkammer in zur Ebene der Substrate senkrechten Richtung durch entsprechende Öffnungen, was durch die gestrichelten Pfeile A angedeutet ist.

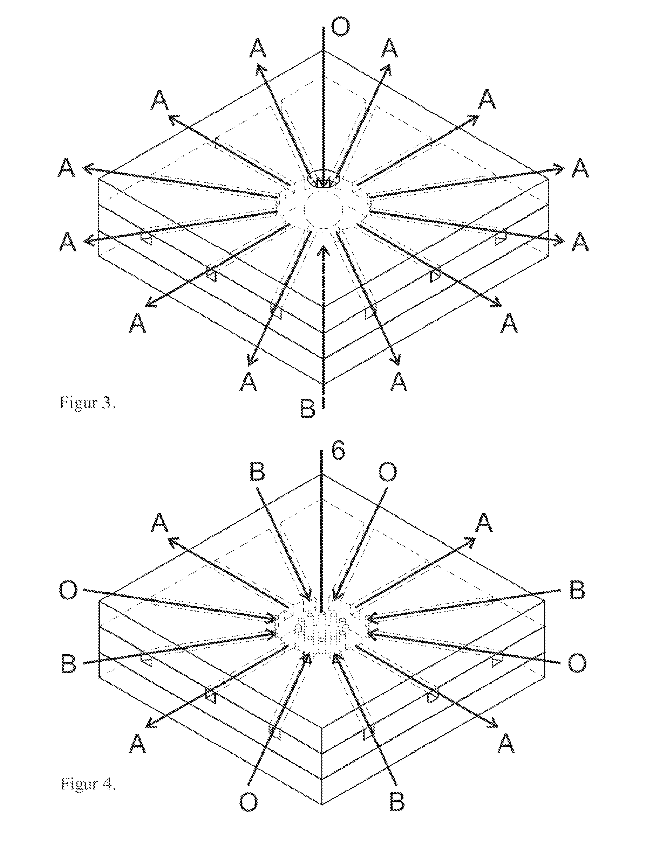

Bei der Ausführungsform der Figur 3 treten Brenngas B und Oxidationsmittel O von oben bzw. unten in einer zur Ebene der Substrate senkrechten Richtung in die Brennkammer ein, während das Abgas A die Brennkammer durch die Kanäle im mittleren Substrat (2) verlässt.

Bei der Ausführungsform der Figur 4 treffen wiederum wie bei den Ausführungsformen der Figuren 1 und 2 zwei Brenngasströme aufeinander, treffen zwei Oxidationsmittelströme aufeinander und verlassen zwei Abgasströme A die Brennkammer (5) in entgegengesetzten Richtungen. Zusätzlich sind aber noch auf dem unteren Substrat (1) oder dem oberen Substrat (3) angeordnete kleine Zylinder vorgegeben, die den eigentlichen Raum umschließen, in dem die Verbrennung stattfindet. Diese aufrecht stehenden Zylinder sind auf einer Zylindermantelfläche um das Zentrum der Brennkammer herum angeordnet.

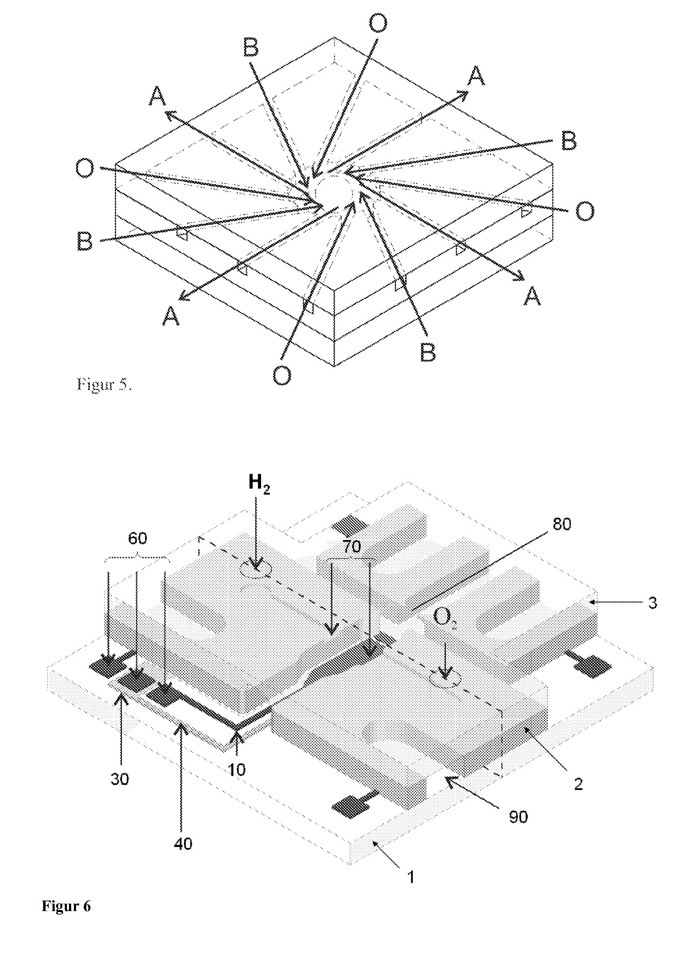

Bei der Ausführungsform der Figur 5 sind die Gase nicht auf das Zentrum der Brennkammer 5 gerichtet oder von derselben weg gerichtet, sondern treten in diese tangential ein, wodurch ein stabiler Flammenwirbel erzeugt wird. Wie weiter oben ausgeführt, hat die sternförmige Anordnung gewisse Vorteile. In vielen anderen Fallen wird man aber auf diese sternförmige Anordnung verzichten und z.B. nur zwei aus entgegengesetzten Richtungen aufeinander zu gerichtete Kanäle verwenden, durch die einerseits Brenngas und andererseits Oxidationsmittel zugeführt wird.

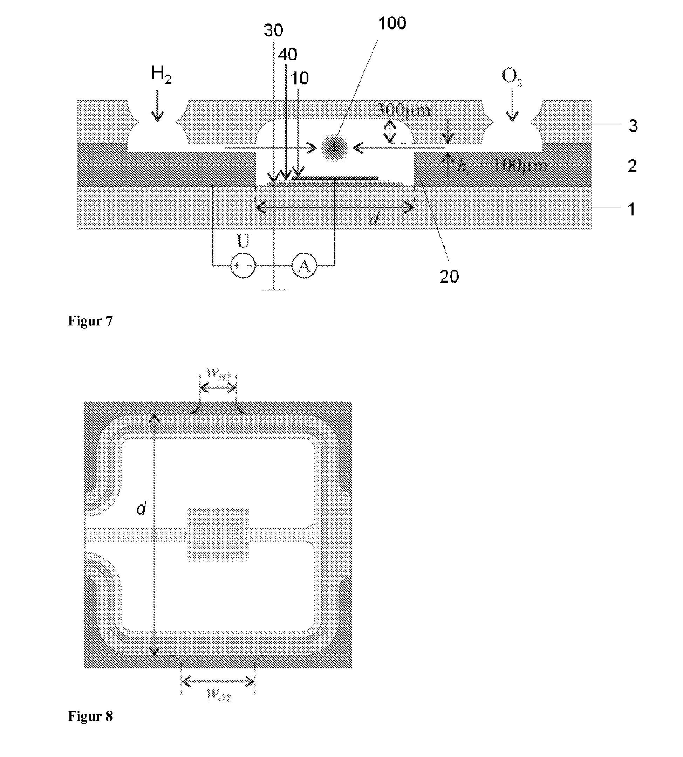

Figur 6 zeigt schematisch einen erfindungsgemäßen FID in perspektivischer Darstellung. Figur 7 zeigt denselben FID, dieses Mal im Querschnitt entlang der gestrichelten Linie in Figur 6. Die zu untersuchende Probe wird vorzugsweise zusammen mit dem Brenngas (Wasserstoff) der Brennkammer zugeführt. Das Oxidationsmittel (Sauerstoff) wird separat vom Brenngas in die Brennkammer eingelassen. Wenn die zu untersuchende Probe dem Brenngas beigemengt wird, sind prinzipiell nur zwei Eingänge für Gase erforderlich, um einen Gegenstrombrenner zu realisieren. Im vorliegenden Beispiel werden die Zugänge für die Gase durch senkrechte Ätzungen durch das obere Glassubstrat erzielt.

Zwischen zwei gegenüberliegenden Vorsprüngen kann ein Zündfunke erzeugt werden. Der Abstand der Vorsprünge beträgt hier 300 µm.

Die Gegenstrom-Diffusionsflamme brennt in der Siliziumebene eines Glas-Solizium-Glas-Sandwichs.

Die Abgasöffnung ist klein und verhindert damit eine Kontamination der Brennkammer durch die Umgebungsluft. Auf größere Mengen an Stützluft, die die Flamme in konventionellen Systemen abschirmen soll, kann verzichtet werden; der erfindungsgemäße FID kann allein mit Sauerstoff und Wasserstoff betrieben werden.

Stabile Gegenstromflammen mit einer Sensitivität von 3,6 mC/gC können bei geringen Strömen von 5ml/min Wasserstoff erreicht werden.

Im vorliegenden Beispiel hat der Siliziumwafer eine Dicke von 500 µm, die Höhe *hₙ* der Düse zum Einleiten der Gase beträgt 100 µ und die Tiefe der Kavität in dem oberen Glassubstrat zur Ausbildung der Brennkammer beträgt 300 µm. Die lateralen Ausdehnungen des FID betragen 8 mm x 8 mm.

Die Polarisationsspannung wird zwischen einer Siliziumgegenelektrode und einer Platinmesselektrode, die auf dem unteren Glassubstrat aufgebracht sind, angelegt. Eine dünne Platinschicht, die in der Kavität auf das obere Glassubstrat aufgebracht ist, könnte ebenso als Messelektrode fungieren.

Bei hohen Temperaturen wird Borosilikatglas, das als ein bevorzugtes Material eingesetzt wird, elektrisch leitfähig, so dass Leckströme auftreten können. Diese können mit einer Schutzelektrode aufgefangen werden. Die Schutzelektrode ist im vorliegenden Beispiel als dünner Chromfilm unterhalb der Messelektrode und einer isolierenden Siliziumoxidschicht realisiert.

Figur 8 zeigt eine Brennkammer von oben. *d* bezeichnet die Breite der Brennkammer. Geht man von einer Ecke der Figur in Richtung Mitte ist zunächst die Wand der Kammer aus Silizium dargestellt. Es folgt das untere Glassubstrat, eine Chrom-Schutzelektrode, eine Siliziumoxid-Isolierung, und eine Platinmesselektrode, die zusätzlich als Temperatursensor ausgeführt ist. In Figur 8 besteht die Platinmesselektrode aus zwei Hälften, die durch eine mäanderförmige Struktur mit einem temperaturabhängigen Widerstand verbunden sind. Damit kann zusätzlich zum Ionenstrom die Temperatur des unteren Glassubstrats gemessen werden.

### Herstellung eines erfindungsgemäßen FID

Im Folgenden ist beispielhaft die Herstellung des erfindungsgemäßen Flammenionisationsdetektors aus den Fig. 6 und 7 beschrieben.

Die Herstellung erfolgt unter Verwendung bekannter Mikrofertigungstechniken, d.h. die Strukturen des erfindungsgemäßen Gegenstrombrenners und des erfindungemäßen FID werden vorzugsweise, so wie auch viele Mikrosysteme, in einer Silizium-Glas-Technologie hergestellt. Es ist auch denkbar, die Strukturen der erfindungsgemäßen Pumpe in einer Silizium-Silizium- oder Glas-Glas-Technologie zu realisieren.

Die Herstellung von Strukturen in Mikrosystemen ist dem Fachmann der Mikrosystemtechnik bekannt. Mikrofertigungstechniken sind z.B. in dem Buch "Fundamentals of Microfabrication" von Marc Madou, CRC Press Boca Raton FLA 1997 oder in dem Buch "Mikrosystemtechnik für Ingenieure" von W. Menz. J. Mohr und O. Paul, Wiley-VCH, Weinheim 2005, beschrieben und illustriert. Eine nähere Beschreibung zur Silizium-Silizium-Technologie findet sich beispielsweise in Q.-Y. Tong, U. Gösele: Semiconductor Wafer Bonding: Science and Technology; The Electrochemical Society Series, Wiley-Verlag, New York (1999). Bezüglich der Glas-Glas-Technologie sei beispielhaft auf folgende Publikationen verwiesen: J. Wie et al., Low Temperature Glass-to-Glass Wafer Bonding, IEEE Transactions on advanced packaging, Vol. 26, No. 3, 2003, Seiten 289-294; Duck-Jung Lee et al., Glass-to-Glass Anodic Bonding for High Vacuum Packaging of Microelectronics and its Stability, MEMS 2000, The Thirteenth Annual International Conference on Micro Electro Mechanical Systems, 23-27 January 2000, Seiten 253-258.

Maßgeblich beruhen die Technologien der Mikrosystemtechnik auf der Strukturierung von Silizium- oder Glassubstraten mit hohem Aspektverhältnis (z.B. schmale Gräben (∼µm) mit großer Tiefe (∼100µm)) mit Strukturgenauigkeiten im Mikrometerbereich mit nasschemischen, vorzugsweise Plasmaätzprozessen kombiniert mit im thermischen Ausdehnungskoeffizienten angepassten natriumhaltigen Glassubstraten (z.B. Pyrex^{®}), die mit einfachen geätzten Strukturen versehen werden und vorzugsweise mit dem so genannten anodischen Bonden direkt, alternativ mit einer als Lotlegierung (AuSi) fungierenden Au-Dünnschicht hermetisch dicht miteinander verbunden werden.

Metallische Strukturen mit hohem Aspektverhältnis lassen sich durch galvanisches Aufwachsen in dicken Photolacken (> 100µm) mit vergleichbarer Genauigkeit realisieren (UV-LIGA). Unter Einsatz von Dünnschichttechnologien wie Hochvakuumverdampfen und Kathodenzerstäubung (Sputtern), PVD-Prozessen oder der chemischen Abscheidung aus der Gasphase (CVD-Prozesse) vorzugsweise im Plasma in Kombination mit Photolithographie und Ätztechniken lassen sich auf diesen Substraten Funktionsschichten wie Metallisierungen, hydrophobe oder hydrophile Oberflächen und Funktionselemente wie Ventil-Dichtungen und Membranen, Heizelemente, Temperatur-, Druck- und Strömungssensoren in einer vollständig prozesskompatiblen Technologie integrieren.

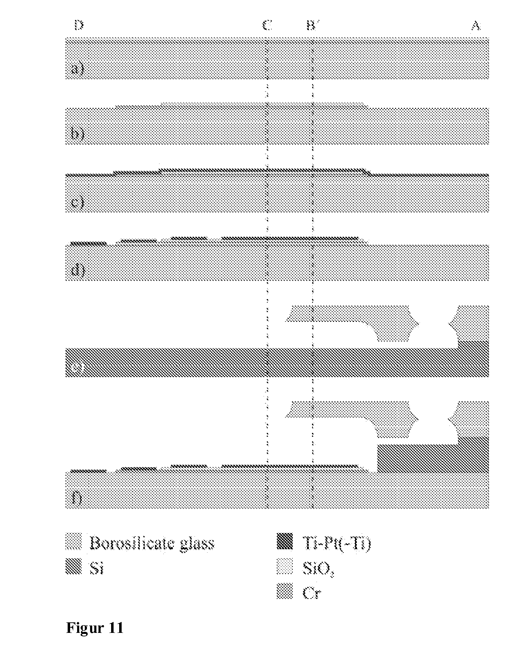

Fig. 11 zeigt die Herstellungssequenz des in den Figuren 6 und 7 gezeigten FID. Ausgangspunkt (Fig. 11 a)) ist das untere Substrat aus Borosilikatglas (500 µm Dicke), auf das eine 100 nm dicke Cr-Schicht und eine 500 nm dicke SiO₂-Schicht mittels Sputter-Deposition aufgebracht sind. Die SiO₂-Schicht und die Cr-Schicht werden mittels photolitographischer Verfahren und Ätzprozessen strukturiert (Fig. 11 b)). Anschließend wird eine 200 nm dicke Pt-Schicht aufgetragen (Fig. 11 c)), die ebenfalls strukturiert wird. Als Haftungsschicht und Deckschicht für die Pt-Schicht werden Ti-Schichten verwendet. Die Dicke der Haftungsschicht beträgt 150 nm, die der Deckschicht 250 nm.

Die Pt-Schicht wird strukturiert und die Ti-Schichten werden entfernt (Fig. 11 d)).

Die mittlere Schicht besteht aus hochdotierten (0,01-0,02 Ω·cm) Silizium (500 µm Dicke). In das Siliziumsubstrat werden 100 µm tiefe Düsen eingebracht.

In das obere Substrat, das ebenfalls aus Borosilikatglas besteht (500 µm Dicke) werden Strukturen für die Zuführung der Gase und die Brennkammer eingebracht (Tiefe der Struktur für die Brennkammer 300 µm).

Die einzelnen Substrate werden schließlich miteinander verbunden (Fig. 11 e), f)).

Elektrostatische Simulation von Elektrodenanordnungen

Mit Hilfe eines Finite-Elemente-Modells (FEM) wurden die elektrischen Felder von verschiedenen Elektrodenanordnungen simuliert. Das zweidimensionale Modell wurde mit Comsol Multiphysics erstellt.

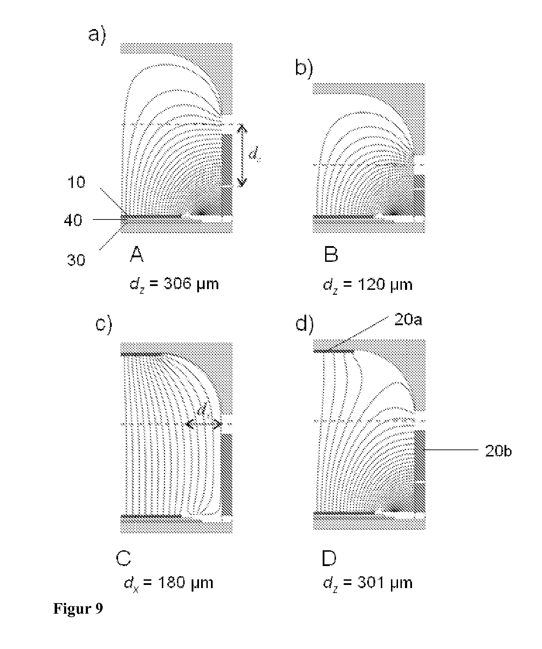

In den Figuren 9 a), b), c) und d) ist jeweils die Hälfte einer Brennkammer im Querschnitt gezeigt. Da die Brennkammern jeweils symmetrisch sind, ergibt sich die Feldlinienanordnung in der anderen nicht gezeigten Hälfte durch Spiegelung an einer Spiegelachse, die vertikal durch die Mitte der Brennkammer verläuft.

In allen Fällen beträgt die Breite *d* der Brennkammer 1 mm. Es sind die elektrischen Feldlinien bei verschiedenen Elektrodenanordnungen und Brennkammergeometrien dargestellt. Die Messelektrode und die Schutzelektrode befinden sich jeweils am Boden der Brennkammer auf dem unteren Glassubstrat. In den Figuren 9 a.) und b.) wird die Gegenelektrode durch die seitliche Wand der Brennkammer (mittleres Substrat) gebildet. In Fig. 9 a.) beträgt die Höhe der vertikalen Wandgegenelektrode 500 µm, in Fig. 9 b) beträgt sie 300 µm. In Fig. 9 c) fungiert ein dünner Film in der Kavität auf dem oberen Glassubstrat als Gegenelektrode, während in Figur 9 d) sowohl die Wand als auch ein oberer dünner Film als Gegenelektrode fungieren.

Als d_{z} wird der vertikale Abstand zwischen der Mitte der Düse (gestrichelte Linie) und der ersten Feldlinie, die zur Gegenelektrode gelenkt wird, bezeichnet (siehe weißer horizontaler Balken auf den Gegenelektrode). Als dₓ wird der horizontale Abstand zwischen der Düsenöffnung und der ersten Feldlinie, die zur Messelektrode gelenkt wird, bezeichnet.

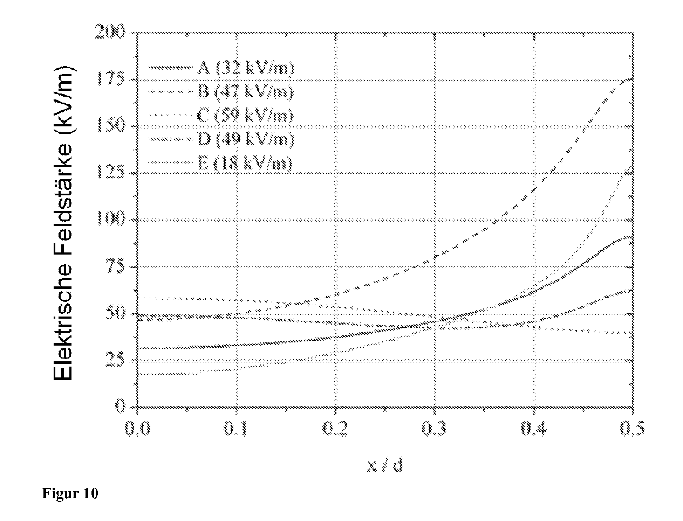

In Fig. 10 sind die elektrischen Feldstärken entlang der gestrichelten Linien in den Figuren 9 a) bis d) dargestellt. Auf der Abszisse ist der auf die Breite d der Brennkammer normierte Abstand x zur Mitte der Brennkammer aufgetragen. Auf der Ordinate ist die elektrische Feldstärke aufgetragen. Die mit dem Buchstaben A gekennzeichnete Linie repräsentiert die Feldstärke in einer Brennkammer gemäß Fig. 9 a).

Die mit dem Buchstaben B gekennzeichnete Linie repräsentiert die Feldstärke in einer Brennkammer gemäß Fig. 9 b).

Die mit dem Buchstaben C gekennzeichnete Linie repräsentiert die Feldstärke in einer Brennkammer gemäß Fig. 9 c).

Die mit dem Buchstaben D gekennzeichnete Linie repräsentiert die Feldstärke in einer Brennkammer gemäß Fig. 9 d).

Die mit dem Buchstaben E gekennzeichnete Linie repräsentiert die Feldstärke in einer Brennkammer gemäß Fig. 9 a), wobei hier d einen Wert von 2 mm anstatt von 1 mm hat.

Aus Fig. 10 ist ersichtlich, dass in der Mitte der Brennkammer die höchste elektrische Feldstärke von *E*₀=59 kV·m⁻¹ herrscht, wenn Mess- und Gegenelektrode gegenüberliegend wie in Fig. 9 c) angeordnet sind. Aus Figur 9 c) ist jedoch ersichtlich, dass geladene Teilchen, die in einem Abstand von bis zu 180 µm (dₓ) von der Düsenöffnung erzeugt werden, zur Schutzelektrode abgelenkt werden und damit nicht zum gemessenen Ionenstrom beitragen.

Obwohl E₀ mit einem Wert von 49 kV·m⁻¹ im Fall der Anordnung in Fig. 9 d) etwas niedriger liegt als im Fall der Anordnung in Fig. 9 c), werden alle geladenen Teilchen, die auf der gestrichelten Linie erzeugt werden, zur Messelektrode gelenkt. Im Abstand von 120 µm von der Düsenöffnung ist die Feldstärke bei einer Anordnung wie in Fig. 9 d) sogar höher als im Fall von Fig. 9 c).

Durch Verringerung der vertikalen Höhe der Wandgegenelektrode von 500 µm (Fig. 9 a)) auf 300 µm (Fig. 9 b)) wird *E*₀ von 32 kV·m⁻¹ auf 47 kV·m⁻¹ erhöht. Gleichzeitig wird jedoch *d_{z}* von 310 auf 120 µm verringert, d.h. ein größerer Anteil geladener Teilchen könnte zur Schutzelektrode umgelenkt werden. Zudem könnte eine Verringerung der Siliziumsubstratdicke von 500 µm (Fig. 9a)) auf 300 µm (Fig. 9 b)) dazu führen, dass die heiße Wasserstoffflamme Schaden anrichtet.

Eine Elektrodenanordnung wie in Fig. 9 d) gezeigt wird daher bevorzugt.

Messungen zur Sensitivität bei verschiedenen Geometrien der Brennkammer

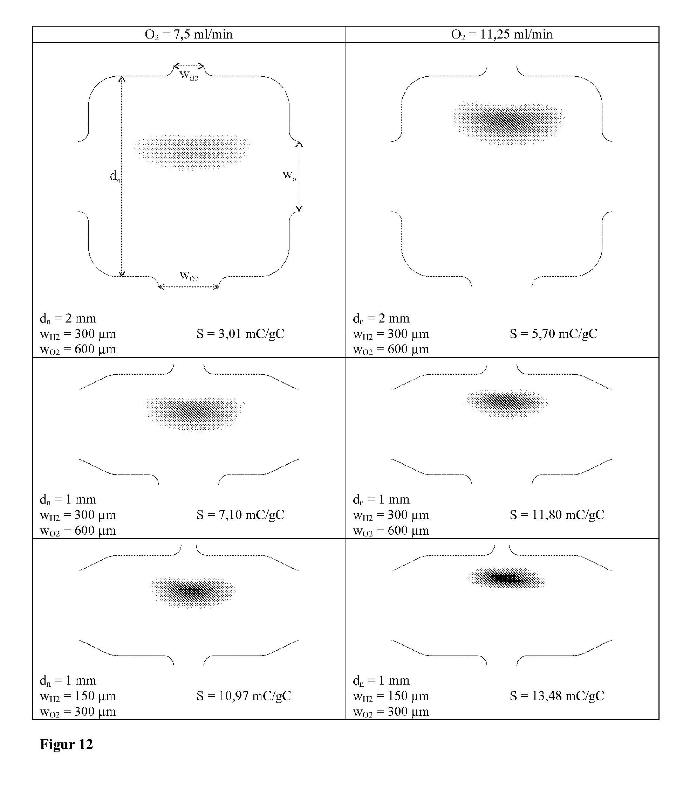

In Fig. 12 sind die Ergebnisse von Untersuchungen zur Sensitivität eines erfindungsgemäßen FID gemäß Fig. 6 und 7 zusammengefasst.

Die Figuren zeigen die Helligkeit der Flamme und Sensitivität des FID als Funktion der Mikrobrennergeometrie und des Sauerstoffflusses.

Eine höchste Sensitivität wird mit einer kleinen Kammer (Düsenabstand = 1 mm), kleinen Düsen (Querschnitt Wasserstoffdüse = 100 µm x 150 µm; Querschnitt Sauerstoffdüse = 100 µm x 300 µm) und hohem Sauerstofffluss (11,25 ml/min) erreicht. Für alle Versuche gilt: Querschnitt für Abgasauslass 100 µm x 700 µm; H₂ = 7,5 ml/min; 1 % CH₄ in N₂ = 2,0 ml/min.

Wasserstoff wird jeweils von oben, Sauerstoff von unten dosiert. Das Abgas entweicht seitlich.

Die Helligkeit der Flamme wurde bestimmt, indem fotografische Aufnahmen mit einer Standard-Digitalkamera gemacht wurden. In den Figuren bedeutet schwarz die höchste Helligkeit der Flamme.

## Patentansprüche

1. Gegenstrombrenner mit einer Brennkammer, der ein Brenngas und ein Oxidationsmittel von entgegengesetzten Seiten zuführbar sind, **dadurch gekennzeichnet, dass** der Gegenstrombrenner drei planare Substrate aufweist, die übereinanderliegend miteinander verbunden sind, dass das mittlere Substrat die Brennkammer aufweist, in die mindestens zwei Kanäle aus entgegengesetzten Richtungen führen, wobei die Öffnungen der Kanäle in der Brennkammer einen Abstand von weniger als 3 mm besitzen.

2. Gegenstrombrenner nach Anspruch 1, **dadurch gekennzeichnet, dass** die Größe der Öffnungen der Kanäle in die Brennkammer im Bereich von 0,005 mm² bis 0,08 mm² liegt.

3. Gegenstrombrenner nach Anspruch 1 oder 2, **dadurch gekennzeichnet, dass** mehrere Kanäle sternförmig in die Brennkammer führen.

4. Gegenstrombrenner nach einem der Ansprüche 1 bis 3, **dadurch gekennzeichnet, dass** er Strukturen aufweist, durch die Gase, die dem Gegenstrombrenner zugeführt werden, durch Abgase, die den Gegenstrombrenner verlassen, vorgewärmt werden.

5. Flammenionisationsdetektor umfassend einen Gegenstrombrenner nach einem der Ansprüche 1 bis 4, sowie eine Mess-, eine Schutz- und eine Gegenelektrode zur Messung eines Ionenstroms, wobei die Elektroden in der Brennkammer des Gegenstrombrenners angeordnet sind.

6. Flammenionisationsdetektor nach Anspruch 5, **dadurch gekennzeichnet, dass** die Mess- und die Schutzelektrode am Boden der Brennkammer auf dem unteren Substrat aufgebracht sind und die seitlichen Wände der Brennkammer, die durch das mittlere Substrat gebildet werden, als Gegenelektrode fungieren.

7. Flammenionisationsdetektor nach Anspruch 6, **dadurch gekennzeichnet, dass** eine weitere Gegenelektrode am Kopf der Brennkammer gegenüberliegend der Messelektrode am oberen Substrat aufgebracht ist.

8. Verfahren zur Analyse eines Probengases, **dadurch gekennzeichnet, dass** das Probengas mit einem Brenngas, vorzugsweise Wasserstoff, vermischt wird und das resultierende Gasgemisch in eine Brennkammer geleitet wird, dass ein Oxidationsmittel, vorzugsweise Sauerstoff, von entgegengesetzer Seite ebenfalls in die Brennkammer geleitet wird, so dass sich die Impulse der aufeinandertreffenden Gase in der Mitte der Brennkammer aufheben und die Gase in einer Flamme in der Mitte der Brennkammer verbrennen, wobei mittels einer Mess- und einer Gegenelektrode die Menge der in der Flamme enthaltenen Ionen in Form eines Ionenstromes gemessen wird.

9. Verfahren nach Anspruch 8, **dadurch gekennzeichnet, dass** die Flamme eine Kugelform besitzt.

10. Verfahren nach einem der Ansprüche 8 oder 9, **dadurch gekennzeichnet, dass** die Volumenströme des Brenngases und des Oxidationsmittels dieselbe Größenordnung aufweisen.
